# EUROPÄISCHE PATENTSCHRIFT

(11) **EP 0 344 489 B1**
(45) Veröffentlichungstag und Bekanntmachung des Hinweises auf die Patenterteilung: **31.03.1993**
(21) Anmeldenummer: 89108424.6
(22) Anmeldetag: 10.05.1989
(51) Int. Cl.: H04L 12/06

(54) **Anordnung zum Eingeben von Zeichen in einen Kennungsgeber einer Fernschreibmaschine**
Arrangement for entering characters into an answer-back generator of a telegraphy machine
Dispositif d'entrée de caractères dans un émetteur d'indicatif d'une machine télégraphique

(30) Priorität: 31.05.1988 DE 3818519
(43) Veröffentlichungstag der Anmeldung: 06.12.1989
(73) Patentinhaber: SIEMENS AKTIENGESELLSCHAFT, 80333 München (DE)
(72) Erfinder: Scheckenbach, Franz, D-8038 Gröbenzell (DE)

(56) Entgegenhaltungen:
- DE-B- 2 403 599

## Beschreibung

Die Erfindung bezieht sich auf eine Anordnung zum Eingeben von Zeichen in einen Kennungsgeber einer Fernschreibmaschine gemäß dem Oberbegriff des Patentanspruchs 1.

Aus der DE-A-24 03 599 ist es bekannt, bei einer Fernschreibmaschine in den Kennungsgeber Zeichen unter Verwendung einer Tastatur einzuspeichern. Bei dieser bekannten Anordnung wird von der Tastatur, wenn ein bestimmter Buchstabe betätigt wird, das diesem Buchstaben zugeordneten Fernschreibzeichen gegebenenfalls mit einem vorangehenden zugeordneten Buchstaben/Ziffernumschaltzeichen erzeugt und in den Kennungsgeber eingespeichert. Der Kennungsgeber eines ersten Teilnehmers wird nach dem Aufbau einer Verbindung zwischen diesem und einem zweiten Teilnehmer abgefragt. Der Kennungsgeber erzeugt eine dem ersten Teilnehmer zugeordnete Folge von Kennungszeichen, mit deren Hilfe der zweite Teilnehmer feststellen kann, ob eine richtige Verbindung hergestellt wurde. Es ist auch möglich, den Kennungsgeber von dem jeweiligen Teilnehmer selbst auszulösen.

Bei der Verwendung einer internationalen Standardtastatur, beispielsweise der Tastatur eines Personal Computers, ist es nicht ohne weiteres möglich, nach dem Betätigen der Tasten entsprechende Fernschreibzeichen zu erzeugen und diese in den Kennungsgeber einzuspeichern.

Zur Lösung dieses Problems wäre es denkbar, einen ASCII-Code des gewünschten Zeichens an der Tastatur einzugeben. In diesem Fall müßte beispielsweise für den Buchstaben A die Zahl 65 oder 41H eingegeben werden. Außerdem müßten dabei die entsprechenden Buchstaben/Ziffernumschaltungen berücksichtigt werden und ebenfalls entsprechende Zeichen erzeugt werden.

Der Erfindung liegt daher die Aufgabe zugrunde, die Anordnung der eingangs genannten Art derart weiterzubilden, daß ein Kennungsgeber auf einfache Weise unter Verwendung einer internationalen Standardtastatur beschrieben werden kann.

Erfindungsgemäß wird die Aufgabe bei der Anordnung der eingangs genannten Art durch die im kennzeichnenden Teil des Patentanspruchs 1 angegebenen Merkmale gelöst.

Für die Eingabe der Zeichen in den Kennungsgeber wird lediglich die dem Fernschreibzeichen entsprechende Nummer in einer Codetabelle des Fernschreibcodes, beispielsweise des CCITT-Codes Nr. 2 eingegeben. Zusätzlich wird das jeweils entsprechende Buchstaben/Ziffernumschaltzeichen eingegeben. So wird beispielsweise die Eingabe 01, die in der Buchstabenebene dem Buchstaben "A" zugeordnet ist und in der Ziffernebene dem Zeichen "-" zugeordnet ist in die Zahl 3 bzw. 35 3 + 32 = 35 umgerechnet und die Binärkombinationen der Zahlen 3 bzw. 35 werden als Zeichen in den Kennungsgeber eingespeichert.

Zur einfachen Bedienbarkeit wird an einer Anzeigeeinheit der vollständige Fernschreibcode mit den zugehörigen Nummern dargestellt, so daß eine Bedienperson auf einfache Weise die Zuordnung zwischen den Zeichen zu den Nummern finden kann. Das Umrechnen der Nummern in die Zeichen erfolgt dann unter Verwendung der Umsetzeinheit, die vorzugsweise als ein Mikrorechner ausgebildet ist.

Ein Ausführungsbeispiel der Anordnung gemäß der Erfindung wird nun im folgenden anhand einer Zeichnung näher erläutert. Es zeigen
FIG 1 ein Blockschaltbild einer Fernschreibmaschine,
FIG 2 einen Ausschnitt einer Darstellung an einem Bildschirm der Fernschreibmaschine.

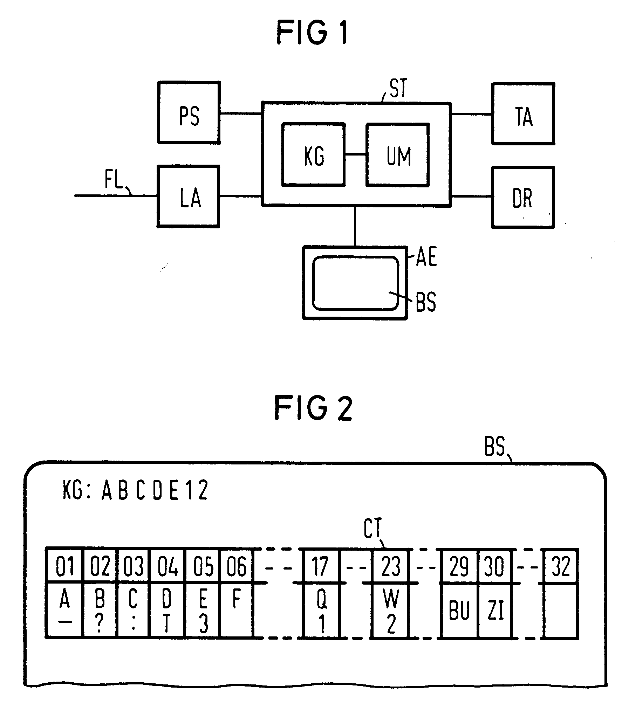

Die in FIG 1 dargestellte Fernschreibmaschine enthält eine Steuereinheit ST, die den Ablauf der verschiedenen Funktionen in der Fernschreibmaschine steuert. An der Steuereinheit ST ist als Eingabeeinheit eine Tastatur TA angeschlossen und als Ausgabeeinheiten sind ein Drucker DR und eine mit einem Bildschirm BS versehene Anzeigeeinheit AE vorgesehen. Zusätzlich kann an der Steuereinheit ST ein peripherer Speicher PS zum Speichern großer Datenmengen angeschlossen sein. Die Verbindung zu einer Fernleitung FL stellt eine Leitungsanpassung her, die ebenfalls an der Steuereinheit ST angeschlossen ist.

Die Steuereinheit ST enthält einen Kennungsgeber KG, in dem Zeichen eines der Fernschreibmaschine zugeordneten Teilnehmers gespeichert sind. Bei einem Verbindungsaufbau zu einem fernen Teilnehmer wird von diesem vor der Übertragung eines Textes zunächst der Kennungsgeber KG abgefragt, um festzustellen, ob er mit dem richtigen Teilnehmer verbunden ist. Zu diesem Zweck werden dann die im Kennungsgeber KG gespeicherten Zeichen über die Leitungsanpassung LA und die Fernleitung FL zu dem fernen Teilnehmer übertragen. Es ist auch möglich, den Kennungsgeber KG vom Teilnehmer selbst auszulösen und über die Leitungsanpassung LA und die Fernleitung FL zum fernen Teilnehmer zu übertragen.

Zum Beschreiben des Kennungsgebers KG ist in der Steuereinheit ST eine Umsetzeinheit UM vorgesehen, die von der Tastatur TA abgegebene Signale in Fernschreibzeichen umsetzt und dem Kennungsgeber KG zuführt. Die Tastatur TA ist vorzugsweise eine internationale Tastatur, die beispielsweise derjenigen eines Personal Computers entspricht. Auch kann selbstverständlich die Fernschreibmaschine auf der Basis eines Personal Computers aufgebaut sein.

Weitere Einzelheiten beim Beschreiben des Kennungsgebers KG mit den Zeichen werden im folgenden im Zusammenhang mit der FIG 2 beschrieben.

Wenn es einer berechtigten Person gelingt, durch ein Paßwort und/oder einen Schlüsselschalter Zugang zum Kennungsgeber KG zu erhalten, der beispielsweise als ein elektrisch programmierbarer Festwertspeicher ausgebildet ist, wird am Bildschirm BS der Anzeigeeinheit AE, wie es in FIG 2 dargestellt ist, eine Codetabelle CT des gesamten Fernschreibcodes, beispielsweise nach dem internationalen Telegrafenalphabet CCITT Nr. 2 mit der Buchstaben- und der Ziffernebene dargestellt. Zusätzlich ist entsprechend dem CCITT-Code Nr. 2 jedes Zeichen mit einer Nummer versehen, die ebenfalls am Bildschirm BS dargestellt wird. Die Darstellung wird dabei durch die Steuereinheit ST gesteuert, die vorzugsweise mindestens einen Mikrorechner enthält, der auch als Umsetzeinheit UM dienen kann.

Die Bedienperson gibt nun an der Tastatur TA nicht die Buchstaben und Ziffern der gewünschten Kennung ein, sondern nur jeweils die Nummer des jeweiligen Zeichens und die zugehörigen Umschaltzeichen BU bzw. ZI, die der Buchstabenbzw. Ziffernebene zugeordnet sind und die Umschaltung in die entsprechenden Ebenen vornehmen.

Die eingegebenen Zeichen werden ebenfalls am Bildschirm BS nach den Zeichen "KG" protokolliert. Falls beispielsweise zunächst eine Buchstabenfolge "ABCDE" und dann eine Ziffernfolge "12" eingegeben werden soll, wird mittels der Tastatur zunächst die Zahl 29 eingegeben, um auf die Buchstabenebene umzuschalten. Anschließend werden die Zahlen 01 bis 05 eingegeben, die den Buchstaben A bis E zugeordnet sind. Danach wird die Zahl 30 eingegeben, um auf die Ziffernebene umzuschalten und hierauf folgt die Eingabe der Zahlen 17 und 23, die den Ziffern 1 und 2 auf der Ziffernebene zugeordnet sind.

Die Umsetzeinheit UM in der Steuereinheit ST erzeugt aus den jeweiligen Nummern die Zeichen, d. h. die Umschaltzeichen, die Buchstaben und die Ziffern entsprechend dem Fernschreibcode und veranlaßt das Einspeichern der Zeichen in den Kennungsgeber KG. Falls die Fernschreibmaschine keine Anzeigeeinheit mit einem Bildschirm enthält, kann die Nummer des jeweiligen Zeichens auch einer üblichen Codetabelle entnommen werden und dann in entsprechender Weise mittels der Tastatur TA eingegeben werden.

## Patentansprüche

1. Anordnung zum Eingeben von Zeichen in einen Kennungsgeber (KG) einer Fernschreibmaschine unter Verwendung einer Tastatur, (TA), die an einer Steuereinheit (ST) der Fernschreibmaschine angeschlossen ist, **dadurch gekennzeichnet,** daß die Zeichen an der Tastatur (TA) durch die Eingabe der entsprechenden Nummer des Zeichens in einer Codetabelle (CT) eines Fernschreibcodes eingebbar sind und daß eine Umsetzeinheit (UM) vorgesehen ist, die diese Nummer unter Berücksichtigung der entsprechenden Umschaltebene (BU/ZI) in die im Kennungsgeber (KG) einzuspeichernden Zeichen umsetzt.

2. Anordnung nach Anspruch 1, **dadurch gekennzeichnet,** daß die eingegebenen Zeichen an einem Bildschirm (BS) einer Anzeigeeinheit (AE) darstellbar sind.

3. Anordnung nach Anspruch 1 oder Anspruch 2, **dadurch gekennzeichnet,** daß an einem Bildschirm (BS) einer Anzeigeeinheit (AE) die vollständige Codetabelle eines Fernschreibcodes mit der jeweils zugehörigen Nummer des Zeichens darstellbar ist.

4. Anordnung nach einem der Ansprüche 1 bis 3, **dadurch gekennzeichnet,** daß als Tastatur (TA) eine Standardtastatur vorgesehen ist.

5. Anordnung nach Anspruch 4, **dadurch gekennzeichnet,** daß als Standardtastatur diejenige eines üblichen Personal Computers vorgesehen ist.

6. Anordnung nach einem der Ansprüche 1 bis 5, **dadurch gekennzeichnet,** daß die Umsetzeinheit (UM) als Mikrorechner ausgebildet ist.

## Claims

1. Arrangement for entering characters into an answerback generator (KG) of a telegraphy machine using a keyboard (TA) connected to a control unit (ST) of the telegraphy machine, characterised in that the characters on the keyboard (TA) can be input by entering the corresponding number of the character in a code table (CT) of a telegraph code, and in that a converter unit (UM) is provided which converts said numbers into the characters to be stored in the answerback generator (KG) taking account of the respective shift level (BU/ZI).

2. Arrangement according to Claim 1, characterised in that the characters entered can be displayed on a screen (BS) of a display unit (AE).

3. Arrangement according to Claim 1 or Claim 2, characterised in that it is possible to display the complete code table of a telegraph code with the respective associated number of the character on a screen (BS) of a display unit (AE).

4. Arrangement according to one of Claims 1 to 3, characterised in that a standard keyboard is provided as keyboard (TA).

5. Arrangement according to Claim 4, characterised in that the keyboard of a conventional personal computer is provided as standard keyboard.

6. Arrangement according to one of Claims 1 to 5, characterised in that the converter unit (UM) is designed as a microcomputer.

## Revendications

1. Dispositif pour introduire des caractères dans un transmetteur d'indicatifs (KG) d'un télescripteur moyennant l'utilisation d'un clavier (TA), qui est raccordé à une unité de commande (ST) du télescripteur, caractérisé par le fait que les caractères peuvent être introduits au niveau du clavier (TA) au moyen de l'introduction du numéro correspondant du caractère dans un tableau (CT) d'un code télégraphique et qu'il est prévu une unité de conversion (UM), qui convertit ce numéro en les caractères devant être mémorisés dans le transmetteur d'indicatifs (KG), en tenant compte du plan correspondant de commutation (BU/ZI).

2. Dispositif suivant la revendication 1, caractérisé par le fait que les caractères introduits peuvent être représentés sur un écran (BS) de l'unité d'affichage (AE).

3. Dispositif suivant la revendication 1 ou 2, caractérisé par le fait que le tableau complet d'un code télégraphique peut être représenté, ainsi que le numéro respectivement associé du caractère, sur un écran (BS) d'une unité d'affichage (AE).

4. Dispositif suivant l'une des revendications 1 à 3, caractérisé par le fait qu'il est prévu comme clavier (TA) un clavier standard.

5. Dispositif suivant la revendication 4, caractérisé par le fait qu'il est prévu comme clavier standard celui d'un ordinateur personnel usuel.

6. Dispositif suivant l'une des revendications 1 à 5, caractérisé par le fait que l'unité de commutation (UM) est agencée sous la forme d'un micro-ordinateur.
